# DEMANDE DE BREVET EUROPEEN

(11) **EP 1 261 053 A1**
(43) Date de publication de la demande: **27.11.2002**
(21) Numéro de dépôt: 02291222.4
(22) Date de dépôt: 17.05.2002
(51) Int. Cl.: H01M 8/04, B60H 1/00, B60K 1/04, B60H 1/32, F01P 7/16

(54) **Dispositif de gestion thermique d'un véhicule automobile équipé d'une pile à combustible**

(30) Priorité: 25.05.2001 FR 0106888
(71) Demandeur: Renault s.a.s., 92100 Boulogne Billancourt (FR)
(72) Inventeur: Olivier, Gérard, 78380 Bougival (FR); Oulefki, Abdelhakim, 93300 Aubervilliers (FR); Samuel, Sébastien, 78000 Versailles (FR)

(57) **Abrégé**

L'invention concerne un dispositif de gestion thermique d'une pluralité d'unités fonctionnelles d'un véhicule automobile équipé d'une pile à combustible, ces unités comprenant
- la pile insérée dans un circuit primaire dans lequel est amené à circuler un fluide primaire, ce circuit étant en relation d'échange thermique, par l'intermédiaire d'un premier échangeur (21), avec un circuit secondaire (26) frigorigène dans lequel est amené à circuler un fluide secondaire frigorigène,
- au moins une deuxième unité fonctionnelle refroidie par des frigories produites par l'évaporation du fluide secondaire dans un évaporateur inséré dans le circuit secondaire,
le circuit secondaire étant en outre en relation d'échange thermique avec l'air extérieur par l'intermédiaire d'un échangeur externe.
Ce dispositif est remarquable ce que l'évaporateur et la deuxième unité fonctionnelle sont insérés dans un circuit de refroidissement dans lequel est amené à circuler un fluide caloporteur.

## Description

La présente invention est relative à un dispositif de gestion thermique d'un véhicule automobile équipé d'une pile à combustible.

On connaît de la demande de brevet français No. 000 2771 déposée par la Demanderesse, un dispositif de gestion thermique au moyen duquel peuvent être gérées pratiquement toutes les fonctions thermiques pouvant se présenter dans un véhicule automobile muni d'une pile à combustible.

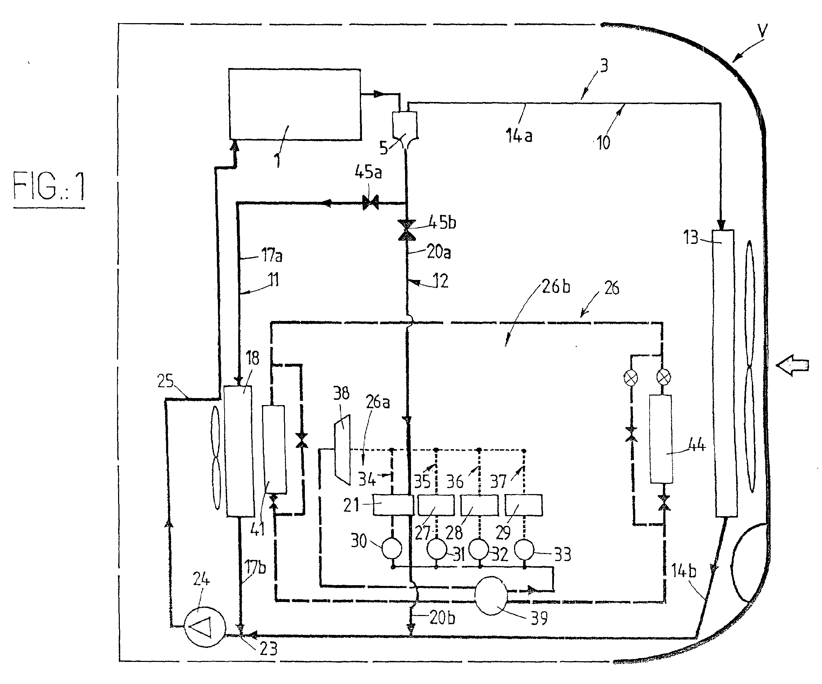

On rappelle ci-dessous pour mémoire la structure de ce dispositif de gestion thermique en se référant à la figure 1.

Ce dispositif comprend un circuit primaire désigné globalement par la référence 3 destiné au refroidissement d'une pile à combustible 1. Le fluide primaire circulant dans ce circuit sort de la pile 1 sous la forme d'un mélange de liquide et de vapeur et traverse un séparateur de phases 5. En sortie du séparateur 5, la phase vapeur est envoyée vers une première branche 10 pour être refroidie par l'air extérieur par l'intermédiaire d'un radiateur primaire 13 inséré entre des canalisations 14a et 14b ; la phase liquide est dirigée d'une part vers une deuxième branche 11 comportant des canalisations 17a et 17b entre lesquelles est connecté un aérotherme 18 pouvant servir au chauffage de l'habitacle (non représenté) du véhicule V, et d'autre part vers une troisième branche 12 comportant des canalisations 20a et 20b entre lesquelles est inséré un premier échangeur 21 dont le rôle est décrit ci-après.

Les trois branches 10 à 12 du circuit primaire aboutissent à une jonction 23 à laquelle est également raccordée l'entrée d'une pompe de circulation 24 chargée de renvoyer le fluide primaire vers la pile à combustible 1 à travers une canalisation 25.

Un circuit secondaire de circulation de fluide secondaire frigorigène, du fréon par exemple, indiqué par la référence générale 26, comporte une première boucle 26a et une deuxième boucle 26b.

La première boucle 26a est destinée au refroidissement de consommateurs de frigories, par exemple la pile à combustible 1, une ou des batteries, un groupe de composants électroniques et un moteur de traction du véhicule V, formant avec d'éventuels moyens d'échange thermiques respectifs, des unités fonctionnelles 1, 27, 28 et 29, respectivement. La nature et le nombre de ces unités fonctionnelles peuvent cependant être différents de ceux décrits, selon le choix du concepteur.

Sur la première boucle 26a, le premier échangeur 21 et les unités fonctionnelles 27, 28 et 29 sont insérés, en série avec des détendeurs 30 à 33 respectifs, dans des branches 34 à 37, respectivement, parallèles et connectées d'une part à l'entrée d'un compresseur 38 et, d'autre part, à une vanne à quatre voies 39.

La deuxième boucle 26b, connectée à la première boucle 26a par l'intermédiaire de la vanne à quatre voies 39, est destinée à la gestion thermiqué de l'habitacle, et notamment à sa climatisation, par l'intermédiaire d'un échangeur d'habitacle 41, et à l'évacuation de la puissance calorifique ou frigorifique excédentaire vers l'extérieur, par l'intermédiaire d'un échangeur externe 44.

Le circuit secondaire 26 est conçu pour permettre une évaporation ou une condensation du fluide secondaire dans l'échangeur d'habitacle 41 selon la position de la vanne à quatre voies 39. Pour plus de détails, on se référera au document sus-cité.

La compression par le compresseur 38 du fluide secondaire frigorigène lui fournit de l'énergie qu'il restitue principalement lors de sa condensation sous forme d'énergie calorifique. Si les besoins calorifiques sont importants, la quantité de fluide à comprimer doit l'être en proportion.

Par ailleurs, seul le fluide préalablement condensé et détendu peut être évaporé pour fournir de l'énergie frigorifique. Si les besoins frigorifiques sont importants, la quantité de fluide à comprimer doit donc l'être en proportion.

Le compresseur 38 doit donc être dimensionné pour satisfaire les besoins thermiques de l'ensemble des consommateurs en relation d'échange thermique avec le circuit secondaire, même dans des situations extrêmes, par exemple où tous les consommateurs ont besoin d'être refroidis. Si les consommateurs sont nombreux ou ont des besoins thermiques élevés, ce qui est le cas s'ils incluent la pile à combustible 1, une ou des batteries, un groupe de composants électroniques et le moteur de traction du véhicule V, le compresseur 38 doit être de forte puissance, ce qui implique des dimensions et un poids particulièrement gênants dans le cadre d'une application à un véhicule automobile.

Le but de la présente invention est de fournir un dispositif de gestion thermique adapté à la gestion thermique d'une pluralité de consommateurs mais permettant l'utilisation d'un compresseur de plus faible puissance que celui du dispositif de la technique antérieure.

On atteint ce but au moyen d'un dispositif de gestion thermique d'une pluralité d'unités fonctionnelles d'un véhicule automobile équipé d'une pile à combustible, lesdites unités fonctionnelles comprenant
- ladite pile à combustible insérée dans un circuit primaire dans lequel est amené à circuler un fluide primaire, ledit circuit primaire étant en relation d'échange thermique, par l'intermédiaire d'un premier échangeur, avec un circuit secondaire frigorigène dans lequel est amené à circuler un fluide secondaire frigorigène au moins chargé de prélever, en cas de nécessité, de l'énergie calorifique dudit fluide primaire,
- au moins une deuxième unité fonctionnelle refroidie par des frigories produites par l'évaporation dudit fluide secondaire dans un évaporateur inséré dans ledit circuit secondaire,
ledit circuit secondaire étant en outre en relation d'échange thermique avec l'air extérieur par l'intermédiaire d'un échangeur externe,
remarquable ce que ledit évaporateur et ladite deuxième unité fonctionnelle sont insérés, en série avec une pompe, dans un circuit de refroidissement dans lequel est amené à circuler un fluide caloporteur et comportant en outre au moins un organe de refroidissement dudit fluide caloporteur, de manière que ledit fluide caloporteur transporte lesdites frigories dudit évaporateur à ladite deuxième unité fonctionnelle.

Grâce à cette caractéristique, le dispositif de gestion thermique selon l'invention permet de satisfaire les besoins thermiques d'une pluralité de consommateurs au moyen d'un compresseur de puissance réduite, une partie des frigories du fluide caloporteur lui étant fournie par l'intermédiaire de l'organe de refroidissement.

Selon une autre caractéristique importante de l'invention, ledit organe de refroidissement dudit fluide caloporteur est un radiateur, en relation d'échange thermique avec l'air extérieur, inséré dans ledit circuit de refroidissement en amont de ladite deuxième unité fonctionnelle.

Suivant d'autres caractéristiques avantageuses de l'invention,
- lesdites unités fonctionnelles comprennent l'habitacle dudit véhicule, ledit habitacle étant en relation d'échange thermique, par l'intermédiaire d'un échangeur d'habitacle, avec ledit circuit secondaire,
- un aérotherme en relation d'échange thermique avec ledit habitacle est inséré dans ledit circuit de refroidissement en amont de ladite deuxième unité fonctionnelle,
- ledit circuit de refroidissement comporte des moyens de réglage du débit d'au moins un desdits fluides caloporteur et secondaire à travers ledit évaporateur,
- lesdits moyens de réglage de débit comportent au moins une branche de dérivation contournant ledit évaporateur et des moyens de répartition du débit dudit fluide entre ladite branche de dérivation et une branche d'évaporateur dans laquelle est inséré ledit évaporateur,
- lesdits moyens de répartition comportent des vannes insérées dans ladite branche de dérivation et ladite branche d'évaporateur,
- au moins une desdites vannes est à débit réglable en continu,
- ledit circuit de refroidissement, ledit fluide caloporteur et ledit évaporateur sont constitués respectivement par ledit circuit primaire, ledit fluide primaire et ledit premier échangeur, ou
- ledit circuit de refroidissement, ledit fluide caloporteur et ledit évaporateur sont constitués respectivement par un circuit tertiaire, un fluide tertiaire et un deuxième échangeur,
- ladite unité fonctionnelle est formée par au moins un groupe de composants électroniques et/ou une batterie et/ou un moteur de propulsion dudit véhicule associés à leurs moyens d'échange thermique respectifs,
- ledit circuit secondaire comprend des moyens d'inversion du sens de circulation du fluide secondaire dans ledit évaporateur,
- au moins deux échangeurs parmi ledit échangeur d'habitacle, ledit échangeur externe et ledit premier échangeur sont raccordés en parallèle dans ledit circuit secondaire, connectés les uns aux autres, d'un côté par l'intermédiaire de détendeurs respectifs, et, du côté opposé, d'une part à la sortie d'un compresseur, par l'intermédiaire de vannes à haute pression respectives et d'autre part à l'entrée dudit compresseur par l'intermédiaire de vannes à basse pression respectives.

L'invention concerne également un véhicule automobile équipé d'une pile à combustible et d'un dispositif de gestion thermique d'une pluralité d'unités fonctionnelles dudit véhicule automobile, lesdites unités fonctionnelles comprenant
- ladite pile à combustible insérée dans un circuit primaire dans lequel est amené à circuler un fluide primaire, ledit circuit primaire étant en relation d'échange thermique, par l'intermédiaire d'un premier échangeur, avec un circuit secondaire frigorigène dans lequel est amené à circuler un fluide secondaire frigorigène au moins chargé de prélever, en cas de nécessité, de l'énergie calorifique dudit fluide primaire,
- au moins une deuxième unité fonctionnelle refroidie par des frigories produites par l'évaporation dudit fluide secondaire dans un évaporateur inséré dans ledit circuit secondaire,
ledit circuit secondaire étant en outre en relation d'échange thermique avec l'air extérieur par l'intermédiaire d'un échangeur externe,
remarquable en ce que ledit dispositif est conforme à l'invention.

L'invention concerne enfin un procédé de gestion thermique d'une unité fonctionnelle d'un véhicule équipé d'une pile à combustible, ladite unité fonctionnelle étant différente de ladite pile à combustible et de l'habitacle dudit véhicule, remarquable en ce qu'il consiste à produire des frigories par évaporation du fluide frigorigène utilisé pour la climatisation dudit habitacle, et à les transférer à ladite unité fonctionnelle quand les frigories provenant de l'air extérieur et apportées à ladite unité fonctionnelle ne suffisent pas à son refroidissement.

D'autres caractéristiques et avantages de la présente invention apparaîtront au cours de la description qui va suivre, donnée uniquement à titre d'exemple et faite en se référant aux dessins annexés sur lesquels:
- la figure 1 est un schéma, déjà décrit, d'un dispositif de gestion thermique selon la technique antérieure,
- la figure 2 est un schéma d'un dispositif de gestion thermique selon le mode de réalisation préféré de l'invention;
- la figure 3 est un schéma d'un dispositif de gestion thermique selon une première variante de l'invention;
- la figure 4 est un schéma d'un dispositif de gestion thermique selon une deuxième variante de l'invention.

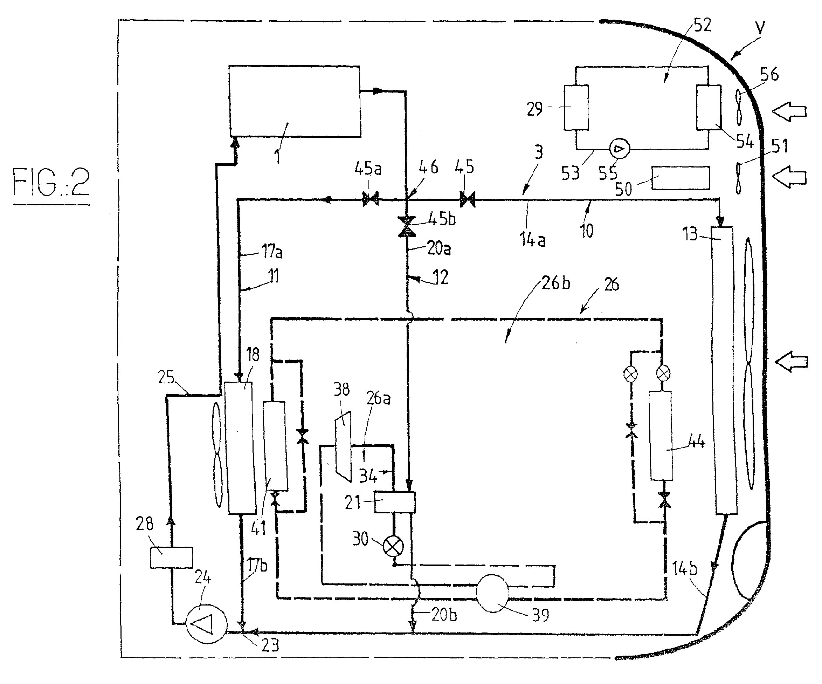

Dans les figures 2 à 4, les parties communes avec le dispositif illustré sur la figure 1 ne sont pas de nouveau décrites en détail. En outre, des références identiques ont été utilisées pour désigner des éléments analogues sur les différentes figures.

On se réfère désormais à la figure 2 qui représente le mode de réalisation préféré de l'invention, remédiant aux inconvénients du dispositif de la figure 1.

La pile à combustible 1 est refroidie au moyen d'un fluide primaire caloporteur circulant dans un circuit primaire 3. A la sortie de la pile à combustible 1, le circuit primaire 3 se divise en trois branches 10 à 12 analogues à celles de la figure 1.

Cependant, dans le cas de la figure 2, le fluide primaire n'entre pas en contact avec les produits de la réaction électrochimique à l'intérieur de la pile à combustible 1. On peut alors choisir un fluide de refroidissement quelconque, et en particulier un fluide qui ne s'évapore pas, ou peu, en traversant la pile à combustible 1, par exemple de l'eau glycolée, et donc se passer de séparateur de phases. On réalise ainsi une économie.

La répartition des débits dans les trois branches 10 à 12 est réalisée au moyen de trois vannes, 45a, 45b et 45c respectivement, de préférence à débit variable en continu, insérées sur les canalisations 17a, 20a et 14a, respectivement, ou, dans une variante non représentée, au moyen d'une vanne à trois voies insérée à une jonction 46 entre les trois branches 10, 11 et 12.

Selon une autre caractéristique de l'invention, l'une des unités fonctionnelles, de préférence l'unité fonctionnelle 28 en relation d'échange thermique avec le groupe de composants électroniques, est insérée sur la canalisation 25 entre la sortie de la pompe 24 et l'entrée de la pile à combustible 1 et est traversée par le fluide primaire.

Le circuit secondaire 26 de circulation de fluide secondaire frigorigène comporte une première boucle 26a où sont successivement insérés le compresseur 38, la vanne à quatre voies 39, le détendeur 30 et le premier échangeur 21, et une deuxième boucle 26b identique à celle précédemment décrite.

L'unité fonctionnelle 50 des batteries est refroidie par circulation d'air provenant par exemple de l'extérieur du véhicule V et, par exemple, soufflé au moyen d'un ventilateur 51.

L'unité fonctionnelle 29 du moteur de traction du véhicule V est insérée dans un circuit indépendant, désigné globalement par la référence 52, dans lequel circule par exemple de l'huile. Le circuit 52 comporte classiquement un réseau de canalisations 53 sur lesquelles sont insérés, en série avec l'unité fonctionnelle 29, un échangeur 54, par exemple air/huile, en relation d'échange thermique avec une source frigorifique, par exemple l'air extérieur, et une pompe 55 de circulation. L'échangeur 54 est de préférence équipé d'un ventilateur 56 pour améliorer les échanges thermiques par convection.

Le fonctionnement du dispositif illustré sur la figure 2 est le suivant.

Le fluide primaire en sortie de pile à combustible 1, en grande partie en phase liquide, peut être envoyé vers chacune des branches 10, 11 et 12 selon la position des vannes 45a, 45b et 45c.

En cas de besoins calorifiques dans l'habitacle, le fluide est de préférence envoyé dans la branche 11 vers l'aérotherme 18. Sinon, ou si les échanges à travers cet aérotherme ne permettent pas un refroidissement suffisant du fluide primaire, il est de préférence envoyé dans la branche 10 pour être refroidi par l'air extérieur à travers le radiateur 13. Enfin, si les échanges à travers l'aérotherme 18 et le radiateur 13 ne suffisent pas toujours pas aux besoins frigorifiques du fluide primaire, ce dernier est envoyé dans la branche 12 pour être refroidi par des frigories résultant de l'évaporation du fluide secondaire dans l'échangeur 21.

Le recours au circuit secondaire 26 est donc limité au seul cas où le refroidissement par l'air extérieur et par l'air soufflé dans l'habitacle ne suffit pas à satisfaire les besoins frigorifiques du fluide primaire, alors que dans le dispositif décrit sur la figure 1, ce recours était indispensable dès qu'aucune énergie calorifique ne pouvait être évacuée vers l'habitacle. Le compresseur est donc moins sollicité, ce qui constitue une source d'économies d'énergie.

Le compresseur 38 n'a plus en charge ni le refroidissement du moteur ni celui des batteries. Il peut donc être de puissance inférieure.

Les composants électroniques sont refroidis par du fluide primaire sorti chaud de la pile à combustible 1, puis refroidi, pour des fractions dépendant du réglage des vannes 45a, 45b et 45c, dans l'aérotherme 18, dans le premier échangeur 21, et dans le radiateur primaire 13, en relation d'échange thermique avec respectivement l'air soufflé dans l'habitacle, le fluide secondaire, et l'air extérieur.

Il apparaît clairement que, dans le dispositif représenté sur la figure 2, ledit circuit de refroidissement, ledit fluide caloporteur et ledit évaporateur sont constitués respectivement par le circuit primaire 3, le fluide primaire et le premier échangeur 21.

Pour limiter au maximum la puissance du compresseur 38, et donc son volume et son poids, il est avantageux d'augmenter la capacité d'échange thermique du radiateur 13, par exemple en disposant un radiateur complémentaire, non représenté, en parallèle avec le radiateur 13, l'air extérieur constituant une source frigorifique abondante et gratuite.

Avantageusement, le dispositif selon l'invention utilise également l'air extérieur pour le refroidissement des batteries.

La quantité d'énergie frigorifique transmise au fluide primaire à travers le premier échangeur 21 peut être avantageusement fixée en fonction des besoins de la pile à combustible 1 et des composants électroniques par ajustement du débit de fluide secondaire à travers cet échangeur 21, par exemple par réglage du débit du compresseur 38.

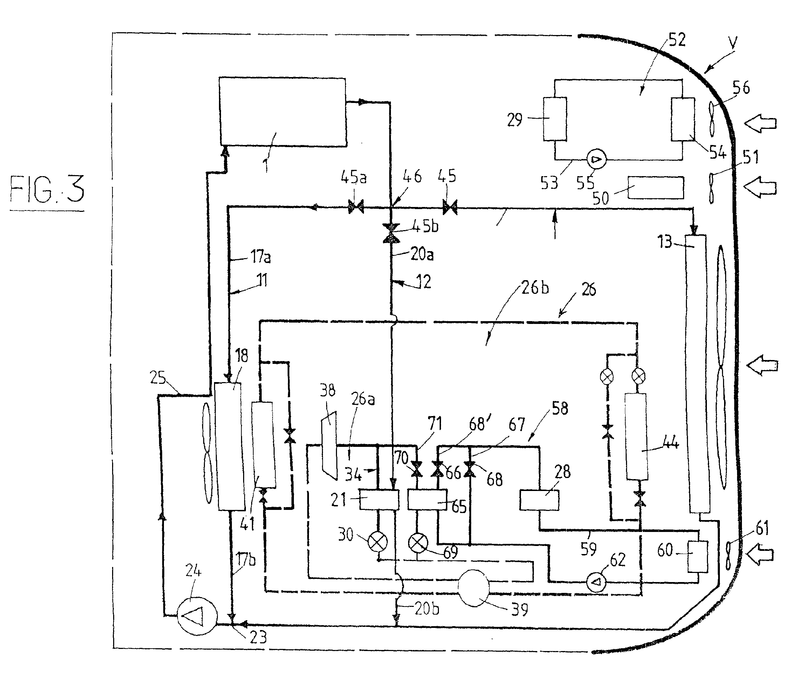

On se réfère désormais à la figure 3 dans laquelle l'unité fonctionnelle 28 des composants électroniques est refroidie au moyen d'un circuit tertiaire 58 parcouru par un fluide tertiaire, par exemple de même nature que le fluide primaire du circuit primaire 3.

Le circuit tertiaire 58 comporte un réseau de canalisations 59 sur lesquelles sont insérés en série l'unité fonctionnelle 28, un radiateur tertiaire 60 équipé par exemple d'un ventilateur 61, une pompe de circulation 62, un deuxième échangeur fluide tertiaire-fluide secondaire frigorigène 65, et une vanne 66, de préférence à débit réglable en continu. Une branche de dérivation 67 sur laquelle est insérée une vanne 68, de préférence à débit réglable en continu, est montée en parallèle à une branche 68' sur laquelle sont insérés le deuxième échangeur 65 et la vanne 66.

Le deuxième échangeur 65 est en outre inséré en série avec un détendeur 69 et une vanne 70 dans une branche 71 de la première boucle 26a du circuit secondaire 26. La branche 71 est parallèle à la branche 34 sur laquelle sont insérés le premier échangeur 21 de refroidissement du fluide primaire et le détendeur 30. Elle est connectée à l'entrée du compresseur 38 et à la vanne à quatre voies 39.

Le fonctionnement du circuit tertiaire 58 est le suivant.

Le fluide tertiaire mis en circulation par la pompe 62 dans le circuit tertiaire 58 se refroidit à travers le radiateur 60, lui-même refroidi par l'air extérieur, éventuellement soufflé par le ventilateur 61.

Si l'énergie frigorifique ainsi délivrée est suffisante pour le refroidissement des composants électroniques, la vanne 68 est, de préférence, ouverte et le deuxième échangeur 65 est inactivé, de préférence par fermeture des deux vannes 66 et 70. Aucun fluide ne circule à travers le deuxième échangeur 65, ce qui limite les pertes de charges dans cet échangeur. De plus, le compresseur 38 ne fournit aucune énergie frigorifique au deuxième échangeur 65, ce qui limite sa consommation énergétique.

Si, au contraire, l'énergie frigorifique ainsi délivrée est insuffisante, la vanne 68 est fermée et les vannes 66 et 70 sont ouvertes dans la mesure nécessaire. Le fluide secondaire s'évapore alors dans le deuxième échangeur 65, en refroidissant encore le fluide tertiaire déjà refroidi dans le radiateur 60.

Si l'énergie frigorifique délivrée aux composants électroniques reste insuffisante, le débit du fluide secondaire peut être augmenté, par exemple en augmentant le débit du compresseur 38.

Il apparaît clairement que, dans le dispositif représenté sur la figure 3, ledit circuit de refroidissement, ledit fluide caloporteur et ledit évaporateur sont constitués respectivement par le circuit tertiaire 58, le fluide tertiaire et le deuxième échangeur 65.

En comparaison avec le dispositif selon le mode de réalisation préféré de l'invention illustré par la figure 2, la variante illustrée sur la figure 3 présente l'avantage de permettre un refroidissement des composants électroniques sensiblement indépendant du fonctionnement du circuit primaire 3, même si les circuits primaire 3 et tertiaire 58 sont en relation thermique par l'intermédiaire du circuit secondaire 26. Une telle indépendance est notamment avantageuse si les besoins frigorifiques de la pile à combustible 1 et des composants électroniques ne sont pas parfaitement compatibles. Dans le dispositif selon le mode de réalisation préféré de l'invention, il est en effet possible qu'il soit nécessaire de refroidir le fluide primaire, par exemple pour satisfaire les besoins de la pile à combustible 1, jusqu'à une température telle qu'elle conduise à un refroidissement excessif des composants électroniques, ou réciproquement. L'excès de puissance frigorifique représente alors une perte énergétique que la variante de la figure 3 permet d'éviter.

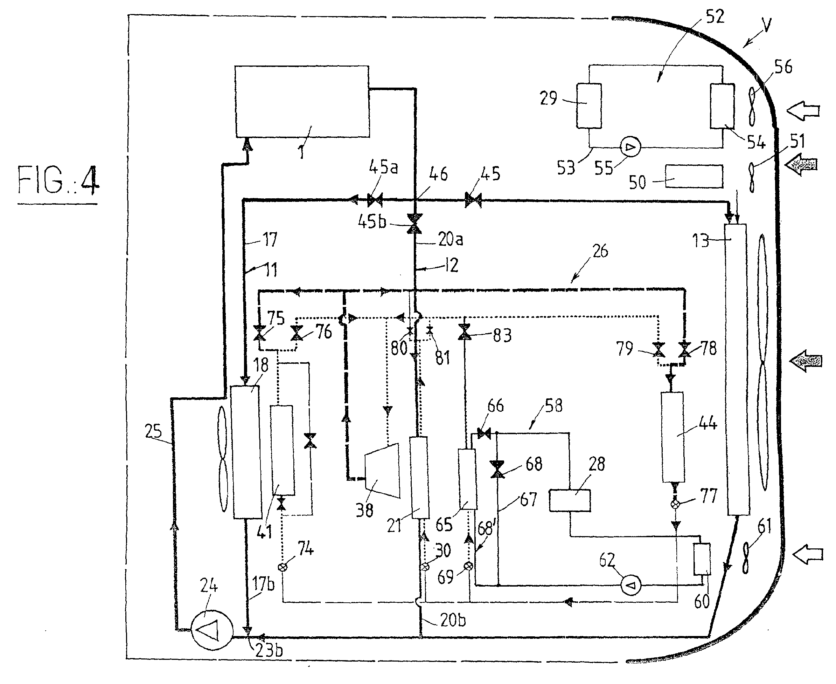

La deuxième variante de l'invention, illustrée sur la figure 4 ne diffère du mode de réalisation préféré illustré sur la figure 2 qu'en ce qui concerne le circuit secondaire 26.

Alors que, dans le dispositif de gestion thermique représenté sur la figure 1, la commutation entre le chauffage et le refroidissement de l'habitacle à travers l'échangeur d'habitacle 41 est obtenue par inversion de la vanne à quatre voies 39, dans le mode de réalisation de la figure 4, cette fonction est assurée par deux vannes distinctes.

L'échangeur d'habitacle 41 est associé d'un côté, dit « moyenne pression », à un détendeur 74 et, du côté opposé, à deux vannes à haute et à basse pression, 75 et 76 respectivement, qui permettent de le connecter sélectivement à la haute pression (vanne 75) régnant du côté refoulement du compresseur 38 ou à la basse pression (vanne 76) régnant du côté aspiration du compresseur 38.

L'échangeur externe 44, pour sa part, est équipé d'un détendeur 77 du côté moyenne pression et, du côté opposé, de deux vannes à haute et à basse pression, 78 et 79 respectivement, permettant de le connecter sélectivement à la haute pression (vanne 78) et à la basse pression (vanne 79).

De même, le premier échangeur 21 est équipé respectivement d'un détendeur 30 du côté moyenne pression et, du côté opposé, de deux vannes à haute et à basse pression, 80 et 81 respectivement, permettant de le connecter sélectivement à la haute ou à la basse pression.

Le deuxième échangeur 65 est équipé d'un détendeur 69 du côté moyenne pression et, du côté opposé, d'une vanne 83 permettant de le connecter à la basse pression.

Le circuit tertiaire 58 est identique à celui décrit sur la figure 3.

Le dispositif illustré sur la figure 4 fonctionne de la manière suivante.

Dans le cas d'un refroidissement de l'habitacle, du fluide primaire et du fluide tertiaire, illustré sur la figure 4, les vannes 75, 79 et 80 sont fermées et les vannes 76, 78, 81 et 83 sont ouvertes. Le fluide secondaire frigorigène à haute pression sortant du compresseur 38 fait alors fonctionner l'échangeur externe 44 en condenseur en faisant passer le fluide secondaire frigorigène de la phase gazeuse à la phase liquide. Cette condensation est suivie d'une détente dans le détendeur 77 faisant passer le fluide de l'état liquide à l'état de mélange de liquide et de gaz sous moyenne pression. Les détendeurs 30, 69 et 74 permettent alors de ramener le fluide secondaire à la basse pression.

La vanne 42 est fermée et le fluide secondaire s'évapore dans l'échangeur d'habitacle 41 refroidissant ainsi l'air entrant dans l'habitacle. Il s'évapore également dans les premier et deuxième échangeurs 21 et 65, refroidissant ainsi les fluide primaire et tertiaire, et donc la pile à combustible 1 et, les vannes 66 et 68 étant respectivement ouverte et fermée, l'unité fonctionnelle 28.

Dans le cas où on n'a pas besoin de refroidir l'habitacle, l'échangeur 41 est mis en court-circuit, la vanne 43 étant fermée et la vanne 42 étant ouverte.

De même, si le refroidissement du fluide tertiaire à travers le radiateur tertiaire est suffisant, le deuxième échangeur 65 est mis en court-circuit, la vanne 66 étant fermée et la vanne 68 étant ouverte.

Pour réchauffer l'habitacle, les vannes 75 et 79 sont ouvertes et les vannes 76 et 78 sont fermées. Il en résulte une inversion des rôles des échangeurs 41 et 44, l'échangeur d'habitacle 41 opérant alors en condenseur et chauffant l'air soufflé qui le traverse.

Le sens de circulation du fluide frigorigène dans le premier échangeur 21 peut être sélectionné de manière similaire par commande des vannes correspondantes 80 et 81, ce qui permet ainsi de faire sélectivement s'évaporer ou se condenser le fluide frigorigène dans cet échangeur. Ainsi peut-on, au choix, refroidir ou réchauffer le fluide primaire et donc la pile à combustible 1. Le chauffage de la pile à combustible 1 peut être utile par exemple dans le cas d'un démarrage à froid.

La possibilité d'inverser le sens de circulation dans le deuxième échangeur 65 n'est pas prévue, l'unité fonctionnelle 28 ne devant jamais être réchauffée.

D'autres échangeurs peuvent être ajoutés au circuit secondaire 26 en parallèle avec les quatre échangeurs 21, 41, 44 et 65 sur des branches de formes analogues, ce qui offre des possibilités plus étendues que précédemment de modulation et de réglage de la gestion thermique.

Il apparaît clairement que, dans le dispositif représenté sur la figure 4, ledit circuit de refroidissement, ledit fluide caloporteur et ledit évaporateur sont constitués respectivement par le circuit tertiaire 58, le fluide tertiaire et le deuxième échangeur 65.

Bien entendu, la présente invention n'est pas limitée aux modes de réalisation décrits et représentés fournis à titre d'exemples illustratifs et non limitatifs.

Dans d'autres variantes de la présente invention, une ou plusieurs des unités fonctionnelles du véhicule peuvent être insérées en parallèle et/ou en série avec l'évaporateur du circuit secondaire en relation d'échange thermique avec l'unité fonctionnelle 28, c'est-à-dire le premier échangeur 21 (figure 2 et 3) ou le deuxième échangeur (figure 4).

L'unité fonctionnelle 28 peut enfin être associée à d'autres consommateurs de frigories que les composants électroniques, comme par exemple le moteur de propulsion ou les batteries.

## Revendications

1. Dispositif de gestion thermique d'une pluralité d'unités fonctionnelles d'un véhicule automobile (V) équipé d'une pile à combustible (1), lesdites unités fonctionnelles comprenant
- ladite pile à combustible (1) insérée dans un circuit primaire (3) dans lequel est amené à circuler un fluide primaire, ledit circuit primaire étant en relation d'échange thermique, par l'intermédiaire d'un premier échangeur (21), avec un circuit secondaire (26) frigorigène dans lequel est amené à circuler un fluide secondaire frigorigène au moins chargé de prélever, en cas de nécessité, de l'énergie calorifique dudit fluide primaire,
- au moins une deuxième unité fonctionnelle (28) refroidie par des frigories produites par l'évaporation dudit fluide secondaire dans un évaporateur (21 ; 65) inséré dans ledit circuit secondaire (26),
ledit circuit secondaire (26) étant en outre en relation d'échange thermique avec l'air extérieur par l'intermédiaire d'un échangeur externe (44),
**caractérisé en ce que** ledit évaporateur (21 ; 65) et ladite deuxième unité fonctionnelle (28) sont insérés, en série avec une pompe (24 ;62), dans un circuit de refroidissement (3 ; 58) dans lequel est amené à circuler un fluide caloporteur et comportant en outre au moins un organe de refroidissement dudit fluide caloporteur, de manière que ledit fluide caloporteur transporte lesdites frigories dudit évaporateur (21 ; 65) à ladite deuxième unité fonctionnelle (28).

2. Dispositif selon la revendication 1, **caractérisé en ce que** ledit organe de refroidissement dudit fluide caloporteur est un radiateur (13 ; 60), en relation d'échange thermique avec l'air extérieur, inséré dans ledit circuit de refroidissement en amont de ladite deuxième unité fonctionnelle (28).

3. Dispositif selon l'une des revendications 1 et 2, **caractérisé en ce que** lesdites unités fonctionnelles comprennent l'habitacle dudit véhicule (V), ledit habitacle étant en relation d'échange thermique, par l'intermédiaire d'un échangeur d'habitacle (41), avec ledit circuit secondaire (26).

4. Dispositif selon la revendication 3, **caractérisé en ce qu'**un aérotherme (18) en relation d'échange thermique avec ledit habitacle est inséré dans ledit circuit de refroidissement en amont de ladite deuxième unité fonctionnelle (28).

5. Dispositif selon l'une quelconque des revendications précédentes, **caractérisé en ce que** ledit circuit de refroidissement (3 ; 58) comporte des moyens de réglage du débit d'au moins un desdits fluides caloporteur et secondaire à travers ledit évaporateur (21 ; 65).

6. Dispositif selon la revendication 5, **caractérisé en ce que** lesdits moyens de réglage de débit comportent au moins une branche de dérivation (10,11 ; 67) contournant ledit évaporateur (21 ;65) et des moyens de répartition du débit dudit fluide (45a,45b,45c ; 66,68) entre ladite branche de dérivation (10,11 ; 67) et une branche d'évaporateur (12 ; 68') dans laquelle est inséré ledit évaporateur (21 ; 65).

7. Dispositif selon la revendication 6, **caractérisé en ce que** lesdits moyens de répartition comportent des vannes (45a, 45b,45c ; 66,68) insérées dans ladite branche de dérivation (10,11 ; 67) et ladite branche d'évaporateur (12 ; 68').

8. Dispositif selon la revendication 7, **caractérisé en ce qu'**au moins une desdites vannes (45a, 45b,45c ; 66,68) est à débit réglable en continu.

9. Dispositif selon l'une quelconque des revendications précédentes, **caractérisé en ce que** ledit circuit de refroidissement, ledit fluide caloporteur et ledit évaporateur sont constitués respectivement par ledit circuit primaire (3), ledit fluide primaire et ledit premier échangeur (21).

10. Dispositif selon l'une quelconque des revendications 1 à 8, **caractérisé en ce que** ledit circuit de refroidissement, ledit fluide caloporteur et ledit évaporateur sont constitués respectivement par un circuit tertiaire (58), un fluide tertiaire et un deuxième échangeur (65).

11. Dispositif selon l'une quelconque des revendications précédentes, **caractérisé en ce que** ladite unité fonctionnelle (28) est formée par au moins un groupe de composants électroniques et/ou une batterie et/ou un moteur de propulsion dudit véhicule (V) associés à leurs moyens d'échange thermique respectifs.

12. Dispositif selon l'une quelconque des revendications précédentes, **caractérisé en ce que** ledit circuit secondaire comprend des moyens d'inversion (75,76,78,79) du sens de circulation du fluide secondaire dans ledit évaporateur (21 ;65).

13. Dispositif selon la revendication 3 et l'une quelconque des revendications 4 à 12, **caractérisé en ce qu'**au moins deux échangeurs parmi ledit échangeur d'habitacle (41), ledit échangeur externe (44) et ledit premier échangeur (21) sont raccordés en parallèle dans ledit circuit secondaire (26), connectés les uns aux autres, d'un côté par l'intermédiaire de détendeurs respectifs (74,77,30), et, du côté opposé, d'une part à la sortie d'un compresseur (38), par l'intermédiaire de vannes à haute pression respectives (75,78,80) et d'autre part à l'entrée dudit compresseur (38) par l'intermédiaire de vannes à basse pression respectives (76,79,83).

14. Véhicule automobile équipé d'une pile à combustible (1) et d'un dispositif de gestion thermique d'une pluralité d'unités fonctionnelles dudit véhicule automobile (V), lesdites unités fonctionnelles comprenant
- ladite pile à combustible (1) insérée dans un circuit primaire (3) dans lequel est amené à circuler un fluide primaire, ledit circuit primaire étant en relation d'échange thermique, par l'intermédiaire d'un premier échangeur (21), avec un circuit secondaire (26) frigorigène dans lequel est amené à circuler un fluide secondaire frigorigène au moins chargé de prélever, en cas de nécessité, de l'énergie calorifique dudit fluide primaire,
- au moins une deuxième unité fonctionnelle (28) refroidie par des frigories produites par l'évaporation dudit fluide secondaire dans un évaporateur (21 ; 65) inséré dans ledit circuit secondaire (26),
ledit circuit secondaire (26) étant en outre en relation d'échange thermique avec l'air extérieur par l'intermédiaire d'un échangeur externe (44),
**caractérisé en ce que** ledit dispositif est conforme à l'une quelconque des revendications précédentes.

15. Procédé de gestion thermique d'une unité fonctionnelle (28) d'un véhicule (V) équipé d'une pile à combustible (1), ladite unité fonctionnelle étant différente de ladite pile à combustible (1) et de l'habitacle dudit véhicule (V), **caractérisé en ce qu'**il consiste à produire des frigories par évaporation du fluide frigorigène utilisé pour la climatisation (26) dudit habitacle, et à les transférer à ladite unité fonctionnelle (28) quand les frigories provenant de l'air extérieur et apportées à ladite unité fonctionnelle (28) ne suffisent pas à son refroidissement.
